# EUROPÄISCHE PATENTANMELDUNG

(11) **EP 2 423 358 A1**
(43) Veröffentlichungstag der Anmeldung: **29.02.2012**
(21) Anmeldenummer: 11167324.0
(22) Anmeldetag: 24.05.2011
(51) Int. Cl.: D02G 3/12, D02G 3/44, D03D 15/00, A41D 31/00, B60J 11/00, B60N 2/58

(54) **Schnittfestes Textilmaterial und Verwendung eines bei Gleitschutzvorrichtungen für Fahrzeugreifen eingesetzten Textilmaterials als schnittfestes Textilmaterial**

(30) Priorität: 29.07.2010 DE 102010032683
(71) Anmelder: RUD Ketten Rieger & Dietz GmbH u. Co. KG, 73432 Aalen (DE)
(72) Erfinder: Rieger, Johannes Werner, 73447, Oberkochen (DE); Kaiser, Helmut, 73457, Aalen-Essingen (DE)
(74) Vertreter: Grünecker, Kinkeldey, Stockmair & Schwanhäusser

(57) **Zusammenfassung**

Die Erfindung betrifft ein schnittfestes Planen-, Bezugs-, Auskleidungs- und/oder Bekleidungs-Textilmaterial. Das schnittfeste Textilmaterial besteht aus wenigstens einem textilen Grundmaterial (14) und wenigstens einem in das textile Grundmaterial eingebrachten schnittfesten Garn (1). Eine hohe Schnittfestigkeit und eine hohe Geschmeidigkeit des Textilmaterials (14) lassen sich erreichen, wenn das schnittfeste Garn (1) eine Seele (2) aus einem nicht-metallischen Werkstoff und ein um die Seele gewundenes Filament (4) aus einem Metallwerkstoff aufweisen und die Windungen (9) des Filaments in Längsrichtung (10) der Seele mindestens einen Durchmesser (6) des Filaments voneinander beabstandet sind.

## Beschreibung

Die Erfindung betrifft ein schnittfestes Planen-, Bezugs-, Auskleidungs- und/oder Bekleidungs-Textilmaterial wenigstens aus einem textilen Grundmaterial und wenigstens einem in das textile Grundmaterial eingebrachten schnittfesten Garn.

Derartige Textilmaterialien sind aus einer Reihe von Druckschriften bekannt. So befasst sich beispielsweise die DE 93 17 766 U1 mit einem Sitzüberzug für einen Fahrgastsitz, der unempfindlich gegen Beschädigungen sein und einen gewissen Komfort bieten soll. Dies wird durch ein gepolstertes Sitzkissen und eine gepolsterte Rückenlehne mit einem Sitzüberzug aus Aramid-Fasern, der der Sitzform angepasst gewirkt wurde, als Vandalismusschutz erreicht.

In der DE 20 2009 008 156 U1 sind Metallgewebe direkt unter dem Oberstoff als nachteilig angesehen, weil der Sitzkomfort eingeschränkt wird. Um diesen Nachteil zu vermeiden, ist ein Sitzbezug mit unidirektional verstreckten, hochmolekularen Polyolefinfolien oder mit einem Gewebe aus flachen, hochmolekularen Polyolefinbändchen, die direkt unterhalb des Oberstoffes in die Sitzkonstruktion eingebaut sind, vorgeschlagen.

Ein mehrschichtiges, textiles Flächengebilde mit hoher Schnittbeständigkeit besonders für die Herstellung eines Planenstoffes ist aus der DE 44 14 842 A1 bekannt. Eine Schicht des mehrschichtigen textilen Flächengewebes besteht aus einer Maschenware aus Aramid-Fasern.

Einen schnittfesten Verbund für Polsterungsmaterialien im Personennahverkehr zeigt die DE 19 729 783 A1. In dieser Druckschrift ist die Auffassung vertreten, dass bei Polsterungslagen, die Metalldrähte oder Metallfasern enthalten, von herausstehenden Drähten eine erhöhte Verletzungsgefahr ausgeht. Zudem sind Polsterungslagen mit einem Drahtgestrick schwer und nur gering verformbar. Diese Druckschrift sieht daher einen schnittfesten Verbund vor, der frei von Metall ist und zu mindestens 80 Gew.-% aus Polyesterfasern besteht. Der Verbund kann ferner anorganische Fasern, wie Glasfasern oder Kohlenstofffasern, oder organische Fasern, wie Polyolefinfasern, Fasern aus aliphatischen oder aromatischen Polyamiden oder synthetischen Bikomponentenfasern aufweisen.

Die Verwendung von Metalldrähten wird auch in der DE 44 38 013 A1 unter Hinweis auf die Verletzungsgefahr abgelehnt. Um die Verletzungsgefahr zu verringern, wird eine Vandalismus-Schutzschicht aus einer Maschenware aus schnittfesten Fasern und einer wenigstens einseitig auf die Schutzschicht aufgebrachten textilen Fließschicht vorgeschlagen.

Die EP 435 889 A1 bezieht sich auf die Verwendung schnittfester Garne in Schutzkleidungen. Das Zusetzen von Metalldraht zu hochfesten Fasern wird als nachteilig angesehen, weil die sich daraus ergebenen Garne weniger biegsam sind und somit bei Kleidungsstücken rasch zur Ermüdung des Trägers führen. Ferner wird als nachteilig empfunden, das aufgrund der elektrischen Leitfähigkeit Garne mit Metalldraht nicht in Kontakt mit unter hoher Spannung betriebenen Elektrogeräten geraten dürfen. Nach der EP 435 889 A1 ist daher anstelle eines Metalldrahtes eine nicht-metallische Faser mit einem mohs'schen Härtegrad oberhalb von 3 zu verwenden. Dies wird durch eine Faser mit oder aus Glas, Keramik, Kohle oder Gemischen hiervon erreicht.

Ein weiteres textiles Flächengebilde zur Herstellung von Sitzbezügen, das insbesondere in Vandalismus gesicherten Fahrzeugen eingesetzt werden soll, ist aus der DE 44 01 417 A1 bekannt. Das Flächengebilde besteht aus einem Grundmaterial und einem durch Beflocken erzeugten Flor. Für das Grundmaterial kommen Aramid-Fasern, Polyolefinfasern, nach dem Gelspinnverfahren erzeugte Polyethylenfasern, Glasfasern und Metallfasern in Frage, soweit sie einem Beflockungskleber ausreichende Haftung bieten.

Die DE 42 41 973 A1 setzt sich zum Ziel, leicht bedruckbare oder färbbare Antivandalismus-Sitzbezüge zu schaffen. Dies wird durch die Verwendung von gesponnenen Garnen mit einem Kern aus einer schnittfesten Faser, z.B. einer aromatischen Polyamidfaser, erreicht. Als schnittfeste Faser kommt auch eine Polyolefinfaser, eine nach dem Gelspinnverfahren hergestellte Polyethylenfaser, eine Glasfaser oder eine Metallfaser, auch Stahldraht, in Betracht. Für die Mantelsubstanz werden Spinnfasern verwendet.

Ein mehrschichtiger Komplex für eine vor Vandalismus schützende Einlage für Planen ist in der EP 1 428 458 B1 gezeigt. Dabei wird eine besonders hohe Schnittfestigkeit durch eine metallische Verstärkungsmatte erreicht, deren Schuss- und Kettfäden aus Metall sind. Die Kettfäden weisen einen quadratischen oder rechteckigen Querschnitt auf.

In der DE 299 01 109 U1 ist ein schnittfester Faden beschrieben, der ausschließlich aus Drahtfäden besteht. Eine Seele aus rostfreiem Stahl ist auf der Außenseite mit zwei hochfesten Drahtfäden in S- und Z-Wicklungen umwickelt.

Nach der Lehre der US 4,384,449 kann das Garn eines Schutzhandschuhs eine Seele aus vergütetem Draht, der mit Aramid-Fasern umwickelt ist, aufweisen. Ein ähnliches Garn ist auch aus der US 4,470,251 bekannt.

Ein weiterer Schutzhandschuh mit einem Textilmaterial aus einer Kombination von Draht- und Aramid-Fasern ist aus der US 4,004,295 bekannt. Bei diesem Schutzhandschuh sind Metalldraht und Aramid-Garn miteinander verwoben oder verwirkt.

Der mehrschichtige Antivandalismus-Sitzbezug der EP 0 190 064 B1 weist eine Schicht aus einem Metallgewebe auf.

Nach der DE 90 04 625 U1 ist für die Sitze in öffentlichen Verkehrsmitteln ein Drahtgestrick einzusetzen, damit diese mutwilligen Zerstörungen unter weitgehender Bewahrung der angenehmen Sitzeigenschaften widerstehen.

Die EP 0 675 220 B1 schließlich beschreibt eine Vandalismus-Schutzschicht, die aus drahthaltiger Maschenware gefertigt ist. Die Maschenware besteht mindestens teilweise aus schnittfesten Fasern wie Aramid-Fasern, nach dem Gelspinnverfahren ersponnenen Polyethylenfasern oder Glasfasern. In mindestens einem aus der Ebene der Maschenware herausragenden Fadensystem der Maschenware ist ein Draht enthalten. Die Verklebung der Vandalismus-Schutzschicht findet über dieses herausragende Fadensystem statt.

Aus dem obigen Stand der Technik ergibt sich, dass es bislang noch nicht gelungen ist, ein geschmeidiges, aber Vandalismus sicheres und schnittfestes Textilmaterial unter Einsatz von Metalldrähten herzustellen, das zudem bei Einsatz kostengünstiger und üblicher Überzüge keine Verletzungsquelle darstellt.

Der Erfindung liegt folglich die Aufgabe zugrunde, ein geschmeidiges, verletzungsarmes Textilmaterial mit hoher Schnittfestigkeit und Vandalismussicherheit zu schaffen.

Diese Aufgabe wird erfindungsgemäß für das eingangs genannte Textilmaterial dadurch gelöst, dass das schnittfeste Garn eine Seele aus einem nicht-metallischen Werkstoff und ein um die Seele gewundenes Filament aus einem Metallwerkstoff aufweist, wobei die Windungen des Filaments in Längsrichtung der Seele wenigstens einen Filamentdurchmesser voneinander beabstandet sind.

Dieses Material ist aufgrund des Abstandes der um die Seele gewickelten Windungen geschmeidig und aufgrund des Metalldrahtes sehr schnittfest.

Ein derartiges Material wurde von der Anmelderin bislang ausschließlich für textile Gleitschutzvorrichtungen für Fahrzeugreifen entwickelt und eingesetzt. Hierbei wird das Textilmaterial um einen Fahrzeugreifen gelegt, so dass es auf der Lauffläche des Reifens zu liegen kommt und die Reibung auf rutschigem Untergrund, wie Eis und Schnee, erhöht. Insbesondere die Metallfilamente dienen dazu, die Traktion auf Eis zu erhöhen, indem sie in den Untergrund schneiden. Überraschend hat nun die Anmelderin festgestellt, dass dieses Material sich auch zur Herstellung von schnittfesten, vandalismussicheren Stoffen eignet.

Die Erfindung betrifft folglich auch die Verwendung einer bei Gleitschutzvorrichtung für Fahrzeugreifen eingesetzten Garnkombination umfassend ein textiles Grundmaterial und ein Garn mit einer von einem Metallfilament umwundenen Seele als schnittfestes Textilmaterial und/oder schnittfester Bezugsstoff für Planen, Schutzkleidung, Möbelbezüge und Innenraumauskleidung.

Das textile Grundmaterial selbst ist bevorzugt aus nicht-schnittfestem Garn gefertigt, also die Anforderungen beispielsweise einschlägiger Normen an die Schnittfestigkeit nicht erfüllt.

Im folgenden sind für sich jeweils vorteilhafte Weiterbildungen der Erfindung erläutert. Diese Weiterbildungen können beliebig miteinander kombiniert werden.

So können, um die Geschmeidigkeit des Textilmaterials zu erhöhen, die Windungen des Filaments in Längsrichtung der Seele mindestens einen Seelendruchmesser voneinander beabstandet sein.

Die Seele selbst kann aus einem Material gefertigt sein, das dem Metallfilament ausreichende Stütze bietet und von diesem nicht durchschnitten werden kann. Ein mögliches Material für die Seele ist Polyester oder ein Werkstoff überwiegend aus Polyester. Polyester zeigt eine genügende Widerstandsfähigkeit, Härte und Elastizität auch bei niedrigen Temperaturen.

Der Durchmesser des Drahtfilaments kann in einer weiteren vorteilhaften Ausgestaltung deutlich kleiner als der Durchmesser der Seele sein. Der Unterschied kann beispielsweise wenigstens eine Größenordnung betragen. Insbesondere kann der Drahtdurchmesser höchstens 1/10, bevorzugt höchstens 1/15, des Seelendurchmessers betragen. Da der Metalldraht einerseits relativ steif ist, anderseits bereits bei sehr geringem Durchmesser eine hohe Schnittfestigkeit sicherstellt, kann bei diesen Größenverhältnissen eine hohe Schnittfestigkeit zusammen mit einer hohen Geschmeidigkeit sichergestellt werden.

Für die Verbesserung der Geschmeidigkeit ist es ferner von Vorteil, wenn der Durchmesser der Seele höchstens etwa 0,5 mm, bevorzugt zwischen 0,2 und 1,0 mm liegt. Der Durchmesser des Drahtfilaments kann zwischen etwa 0,05 und 0,2 mm betragen. In diesen Größenbereichen kann das schnittfeste Garn zudem ohne besondere Maßnahmen in handelsüblichen Web-, Strick- und/oder Wirkmaschinen verarbeitet werden.

Besonders für den Einsatz an Stellen, die Witterungseinflüssen ausgesetzt sind, ist es von Vorteil, wenn das Filament aus einem korrosionsfesten Metallwerkstoff wie Stahl, Aluminium, Kupfer oder Titan gefertigt ist.

Die Seele des schnittfesten Garns kann aus einem nicht-schnittfesten Material hergestellt sein, so dass die Schnittfestigkeit im Wesentlichen ausschließlich durch das Metallfilament gewährleistet ist. Für eine normgerechte Schnittfestigkeit (z. B. französische Norm F 00-201) ist dies in vielen Fällen bereits ausreichend.

Das Textilmaterial kann gewebt, gestrickt oder gewirkt sein. Ein gewirktes oder gestricktes Textilmaterial hat den Vorteil, dass es etwas geschmeidiger ist und sich leicht an vorgegebene Formen anpassen lässt als ein gewebtes Textilmaterial. Bei einem gewebten Textilmaterial kann das schnittfeste Garn als Kett- und gleichzeitig als Schussfaden eingebracht sein. Wird das schnittfeste Garn entweder nur als Kett- oder nur als Schussfaden eingesetzt, oder verläuft das Garn bei einem gewirkten oder gestrickten Material im Wesentlichen nur entlang einer Richtung, so kann das schnittfeste Textilmaterial um 90° versetzt übereinanderliegende Lagen aufweisen. Dies führt zu einer hohen Schnittfestigkeit, die unabhängig von der Schnittrichtung ist.

Bei einem gewebten Textilmaterial kann eine Körperbindung von Vorteil sein, bei der das schnittfeste Garn über eine größere Länge auf der schnittgefährdeten Seite freiliegt als bei einer Leinwandbindung. Diese Maßnahme hat den Vorteil, dass bei einem Schnitt das Grundmaterial weniger gefährdet ist.

Der Mindestabstand zweier benachbarter, im Wesentlichen parallel zueinander verlaufender schnittfester Garne beträgt bei einer weiteren vorteilhaften Ausgestaltung höchstens etwa 1,5 mm. Der maximale Abstand beträgt 2 mm, bevorzugt weniger als 1,8 mm. Zwischen den Außendurchmessern der schnittfesten Garne sollten nicht mehr als 1,5 mm liegen. Bei diesem Abstand ist ein Eindringen von spitzen Schneidkörpern, wie sie in den für schnittfeste Textilmaterialien einschlägigen Normen und Standards in Tests eingesetzt werden, zuverlässig in Richtung quer zum Garnverlauf verhindert.

Die Erfindung betrifft schließlich auch eine Plane, die beispielsweise für Zelte, LKW-Planen oder Cabriodächer verwendet wird, sowie Bezugsstoffe, Auskleidungsmaterialen und/oder Bekleidungsstücke, wie Schutzkleidung, beispielsweise für Forstarbeiter als Kettenschutz, in Schlachtereien und anderen schnittgefährdeten Bereichen. In diesen Bereichen kann das in einer der eben beschriebenen Ausgestaltungen zum Einsatz kommen.

Im Folgenden ist die Erfindung anhand von Ausführungsbeispielen näher erläutert.

Es zeigen:
- Fig. 1: eine schematische Ansicht eines schnittfesten Garnes;
- Fig. 2: eine schematische Darstellung eines gewebten schnittfesten Textilmaterials mit einem schnittfesten Garn nach Figur 1;
- Fig. 3: eine schematische Darstellung eines schnittfesten Textilmaterials als Maschenware mit einem schnittfesten Garn nach Figur 1.

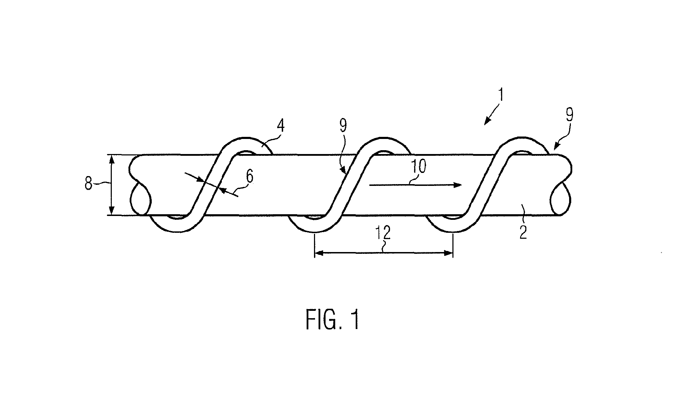

Zunächst wird der Aufbau eines schnittfesten Garnes 1 mit Bezug auf die Figur 1 erläutert.

Das schnittfeste Garn 1 weist eine Seele 2 bevorzugt aus Monofilamenten mit einem E-Modul von etwa 250 cN/tex bis etwa 1000 cN/tex, weiter bevorzugt von wenigstens 700 cN/tex auf.

Um die Seele 2 ist ein Filament 4 aus einem Metall, insbesondere Stahl oder Edelstahl, gewunden. Die Seele ist also einfach umwickelt. Der Durchmesser 6 des Filaments 4 ist, wie Figur 1 erkennen lässt, deutlich bevorzugt um etwa eine Größenordnung, kleiner als der Durchmesser 8 der Seele 2. Der Durchmesser 8 der Seele beträgt zwischen etwa 0,2 mm und vorzugsweise etwa 0,5 mm. Der Durchmesser 6 des Filaments 4 beträgt zwischen etwa 0,5 mm und 0,2 mm, vorzugsweise um die 0,1 mm. Das Verhältnis des Durchmessers 8 zum Durchmesser 6 beträgt mindestens etwa 10:1, bevorzugt mindestens 15:1.

Die Windungen 9 des Filaments 4 auf der Seele 2 sind in Längsrichtung 10 der Seele 2 voneinander beabstandet. Dies führt zu einer hohen Flexibilität des schnittfesten Garnes 1 und damit zu einer hohen Geschmeidigkeit eines Textilmaterials, in das das schnittfeste Garn 1 eingebracht ist.

Der Abstand 12 zwischen den einzelnen Windungen in Längsrichtung 10 beträgt bevorzugt mehrere Filament-Durchmesser 6 bzw. wenigstens einen Seelen-Durchmesser 8. Dies ist für eine hohe Schnittfestigkeit, die im Wesentlichen ausschließlich durch das Filament 4 erreicht wird, bei gleichzeitig hoher Flexibilität ausreichend.

Das schnittfeste Garn kann mit den üblichen Fertigungsverfahren der Textiltechnik verarbeitet, also gewebt, gestrickt oder gewirkt werden.

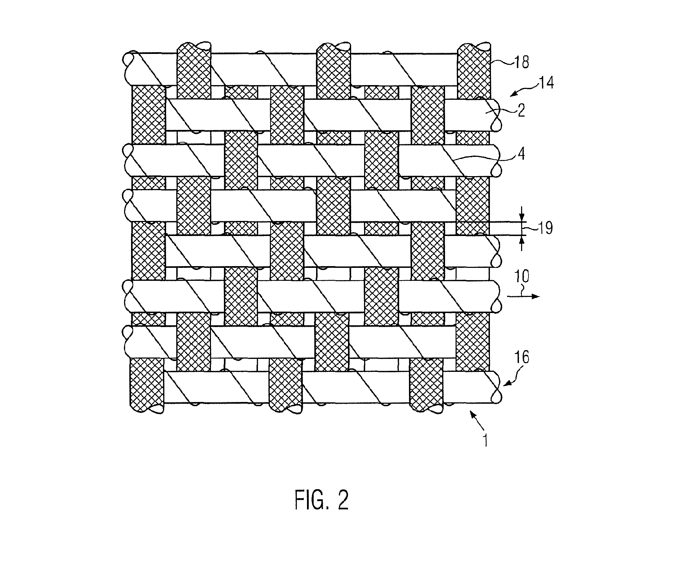

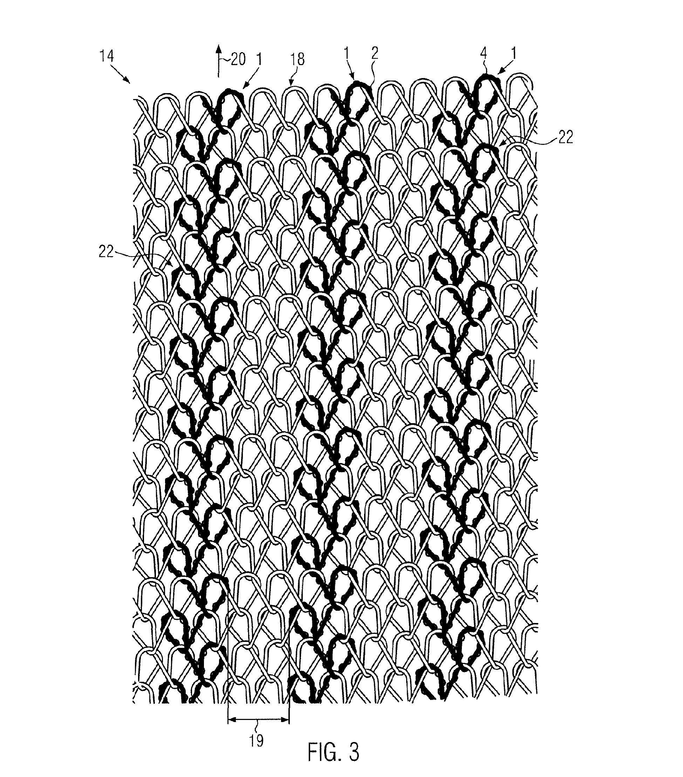

Figur 2 zeigt eine schematische Darstellung eines gewebten schnittfesten Textilmaterials 14, in das das schnittfeste Garn als Kettfaden 16 eingebracht ist. Das Grundmaterial 18 muss nicht schnittfest sein, da das schnittfeste Garn 1 eine ausreichende Schnitt- und Vandalismusfestigkeit gewährleistet. Zwischen zwei benachbarten, im Wesentlichen parallel zueinander verlaufenden schnittfesten Garnen 1 können etwa zwei bis fünf Kett- bzw. Schussfäden, im Ausführungsbeispiel der Figur 3 etwa drei, Kett- bzw. Schussfäden angeordnet sein. Der Abstand 19 zwischen den Mitten zweier parallel verlaufenden, benachbarten schnittfesten Garnen beträgt bevorzugt höchstens etwa 2 mm.

Das in Figur 2 dargestellte Textilmaterial 14 weist eine hohe Schnittfestigkeit insbesondere quer zur Längsrichtung 10 des schnittfesten Garnes 1 auf. Um eine richtungsunabhängig hohe Schnittfestigkeit zu erhalten, kann das schnittfeste Garn 1 in einer Modifikation des in Figur 2 dargestellten Textilmaterials 14 sowohl als Kett- als auch als Schussfaden eingesetzt werden. Für die Abstände zwischen parallel zueinander verlaufenden Schussfäden aus schnittfestem Garn gelten im Wesentlichen die gleichen Werte wie für die Verwendung als Kettfaden.

Alternativ zu dieser Modifikation kann das Textilmaterial 14, wie es in Figur 2 dargestellt ist, auch zwei- oder mehrlagig verwendet werden. Die übereinanderliegenden Lagen sind dabei bevorzugt um 90° gegeneinander gedreht, so dass sie richtungsunabhängig ein Durchschneiden der beiden Lagen verhindern.

Figur 2 zeigt lediglich beispielhaft eine Körperbindung, bei der das schnittfeste Garn über größere Bereiche auf der einen Fläche freiliegt, so dass auf dieser Seite Schnitte das Grundmaterial nicht beschädigen. Alternativ können auch eine Leinwandbindung oder andere Webmuster zum Einsatz kommen.

Figur 3 zeigt eine Ausführungsform des Textilmaterials 14, das aus Maschenware gefertigt ist. Lediglich beispielhaft ist eine Trikotwebung gezeigt, selbstverständlich können auch andere Maschenformen verwendet werden. Bei der in Figur 3 dargestellten Webung ist das schnittfeste Garn 1 im Wesentlichen in einer Richtung, der Garnrichtung 20, orientiert. Die quer zu dieser Garnrichtung 20 vorstehenden Maschen 22 weist das gewirkte Textilmaterial 14 eine hohe Schnittfestigkeit auch bei in Streckungsrichtung 20 geführten Schnitten auf. Diese Schnittfestigkeit kann durch andere Maschenformen, bei denen beispielsweise die schnittfesten Garne 1 im Winkel zueinander verlaufenden Streckungsrichtungen 20 verlaufen, oder zwei- oder mehrlagige gewirkte oder gestrickte Lagen des Textilmaterials 14 weiter verbessert werden.

Das in Figur 2 gezeigte Material wurde zur Verwendung in Gleitschutzvorrichtungen für Fahrzeugreifen entwickelt und eingesetzt, bei der es auf eine Geschmeidigkeit und verletzungsfreie Oberfläche nicht ankommt. Überraschend hat sich nun die Einsatzmöglichkeit dieses Materials im Bereich der vandalismussicheren Textilmaterialien ergeben.

Das Textilmaterial 14 kann für Planen, beispielsweise LKW-Planen, Zeltplanen oder CabrioDächer, als vandalismussichere Schicht für Sitzbezüge, Auskleidungen oder Bekleidungen, beispielsweise Schutzanzüge, insbesondere für Forstarbeiten mit Kettensägen, für Motorradbekleidung und Schutzhandschuhe eingesetzt werden, wobei diese Liste nicht auf die angegebenen Einzelbeispiele beschränkt ist.

## Patentansprüche

1. Schnittfestes Planen-, Bezugs-, Auskleidungs- und/oder Bekleidungs-textilmaterial (14) wenigstens aus einem textilen Grundmaterial (18) und wenigstens einen in das textile Grundmaterial eingebrachten schnittfesten Garn (1), **dadurch gekennzeichnet, dass** das schnittfeste Garn (1) eine Seele (2) aus einem nicht-metallischen Werkstoff und ein um die Seele gebundenes Filament (4) aus einem Metallwerkstoff aufweist, wobei die Windungen des Filaments in Längsrichtung (10) der Seele mindestens einen Durchmesser (6) des Filaments voneinander beabstandet sind.

2. Schnittfestes Textilmaterial (14) nach Anspruch 1, **dadurch gekennzeichnet, dass** das textile Grundmaterial (18) nicht schnittfest ist.

3. Schnittfestes Textilmaterial (14) nach Anspruch 1 oder 2, **dadurch gekennzeichnet, dass** das Filament einen Durchmesser (6) zwischen etwa 0,05 mm und 0,2 mm aufweist.

4. Schnittfestes Textilmaterial (14) nach einem der Ansprüche 1 bis 3, **dadurch gekennzeichnet, dass** das Filament (4) ein Stahlfilament ist.

5. Schnittfestes Textilmaterial (14) nach einem der Ansprüche 1 bis 4, **dadurch gekennzeichnet, dass** die Seele (2) einen Durchmesser (8) zwischen etwa 0,2 mm und etwa 0,5 mm aufweist.

6. Schnittfestes Textilmaterial (14) nach einem der Ansprüche 1 bis 5, **dadurch gekennzeichnet, dass** die Seele (2) aus einem nicht-schnittfesten Material hergestellt ist.

7. Schnittfestes Textilmaterial (14) nach einem der Ansprüche 1 bis 6, **dadurch gekennzeichnet, dass** das Textilmaterial (14) gewebt ist und das schnittfeste Garn (1) als Kett-und als Schussfaden eingebracht ist.

8. Schnittfestes Textilmaterial (14) nach einem der Ansprüche 1 bis 7, **dadurch gekennzeichnet, dass** der Abstand (19) zweier benachbarter, im Wesentlichen parallel zueinander verlaufender schnittfester Garne (1) höchstens etwa 2 mm beträgt.

9. Schnittfestes Textilmaterial (14) nach einem der Ansprüche 1 bis 8, **dadurch gekennzeichnet, dass** das Verhältnis des Durchmessers (8) der Seele (2) zum Durchmesser (6) des Filaments (4) höchstens 10:1 beträgt.

10. Schnittfestes Textilmaterial (14) nach einem der Ansprüche 1 bis 9, **dadurch gekennzeichnet, dass** der Abstand (12) zweier benachbarter Windungen (9) des Filaments (4) in Längsrichtung (10) der Seele (2) wenigstens einen Durchmesser (8) der Seele (2) beträgt.

11. Schnittfestes Textilmaterial (14), **gekennzeichnet durch** zwei um 90° versetzt übereinanderliegende Lagen eines Textilmaterials (14) nach einem der Ansprüche 1 bis 10.

12. Verwendung einer bei Gleitschutzvorrichtungen für Fahrzeugreifen eingesetzten Garnkombination umfassend ein textiles Grundmaterial (18) und ein Garn (1) mit einer von einem Metallfilament (4) umwundenen Seele (2) als schnittfestes Textilmaterial (14) und/oder schnittfester Bezugsstoff, als Planen, Schutzkleidung, Möbelbezüge und/oder zur Innenraumauskleidung.
